# EUROPÄISCHE PATENTSCHRIFT

(11) **EP 3 834 653 B1**
(45) Veröffentlichungstag und Bekanntmachung des Hinweises auf die Patenterteilung: **15.02.2023**
(21) Anmeldenummer: 20212907.8
(22) Anmeldetag: 09.12.2020
(51) Int. Cl.: A44C 21/00, A44C 3/00, G11B 3/68

(54) **MÜNZE ODER MEDAILLE**
COIN OR MEDAL
PIÈCE OU MÉDAILLE

(30) Priorität: 10.12.2019 DE 102019133806
(43) Veröffentlichungstag der Anmeldung: 16.06.2021
(73) Patentinhaber: B.H. Mayer's Kunstprägeanstalt GmbH, 85757 Karlsfeld (DE)
(72) Erfinder: Wegner, Alex, 81245 München (DE)
(74) Vertreter: Baldus, Oliver

(56) Entgegenhaltungen:
- DE-A1-102004 033 356
- DE-T2- 60 102 007
- DE-U1- 9 311 685
- DE-U1-202008 003 639
- DE-U1-202019 106 873

## Beschreibung

Die Erfindung betrifft eine Münze oder Medaille, gemäß dem Oberbegriff von Anspruch 1, sowie ein Prägeverfahren, gemäß dem Oberbegriff von Anspruch 16.

Münzen und Medaillen werden seit jeher, neben der Verwendung als Zahlungsmittel, auch zur Verewigung von Königen und Kaisern benutzt. Die Verwendung von Münzen oder Medaillen als Geschenkartikel zur Mitteilung von Informationen ist aus der DE 10 2004 033 356 A1 bekannt. Hierbei wird auf ein Speichermedium (z.B. ein USB-Stick) zurückgegriffen, das im Inneren der Münze oder Medaille verbaut ist. Die Oberfläche der Münze oder Medaille dient in diesem Fall nur dekorativen Zwecken.

Das Prägen von Motiven, die nur aus angeordneten Reihen von Vertiefungen aufgebaut sind, auf Münzen oder Medaillen sowie der zugehörige Prägestempel sind aus der DE 601 02 007 T2 bekannt. Hierbei werden die Farbschattierungen von eingeprägten Bildern mittels dem Abstand sehr nahe beieinander liegender Reihen von Vertiefungen erzeugt. Die Farbtiefe kann mittels der Tiefe der Reihen angepasst werden. Diese sehr nahe beieinander liegenden Reihen von Vertiefungen werden mittels Laser-Technik eingraviert.

Tonträger für Musik und Tonaufnahmen sind im allgemeinen weitläufig bekannt. Bringt man diese Tonspuren nun auf spezielle Trägermaterialien, ergeben sich vielfältige Anwendungsmöglichkeiten wie zum Beispiel die in der DE 20 2008 003 639 U1 beschriebene Mini-Schallplatte aus Schokolade. Diese ist so ausgestaltet, dass man sie mittels eines handelsüblichen Schallplattenspielers abspielen kann.

Schokolade ist ein sehr vergängliches Material, das auch keine hohe Temperaturbeständigkeit aufweist. Möchte man nun eine Mini-Schallplatte zum Beispiel als Erinnerungsstück verwenden, muss man auf beständigere Materialien zurückgreifen.

Weitere Münzen oder Medaillen sind aus der DE 93 11 685 U1 bekannt.

Der Erfindung liegt daher die Aufgabe zugrunde, eine Münze oder Medaille gemäß dem Oberbegriff von Anspruch 1 zu schaffen, die ein dauerhaftes Erinnerungsstück für zum Beispiel eine Musikveranstaltung bildet, das auch einen praktischen Nutzen aufweist.

Diese Aufgabe wird erfindungsgemäß durch Anspruch 1 bzw. 16 gelöst. Vorteilhafte Weiterbildungen ergeben sich aus den Unteransprüchen.

Dies wird gelöst, indem eine Münze oder Medaille gemäß dem Oberbegriff von Anspruch 1 geschaffen wird, die derart ausgestaltet ist, dass auf der Oberfläche eine Tonspur mittels eines passenden Präge-Verfahrens aufgebracht wird. Diese Tonspur sollte bevorzugt mittels eines handelsüblichen Schallplattenspielers oder eines für die Münze oder Medaille entworfenen Abspielgerätes ausgelesen werden können.

Besonders günstig ist die Verwendung einer Münze, da dieser eine weit verbreitete Symbolik innewohnt, die fast der gesamten Menschheit bekannt ist. Münzen stellen das am weitesten verbreitete Zahlungsmittel dar und werden oft auch als Glücksbringer verwendet.

Ein Vorteil der erfindungsgemäßen Lösung ist die Langlebigkeit der metallischen Münze oder Medaille, die ein Erinnerungsstück darstellen kann, das über Jahre verwendbar ist, im Laufe der Zeit kaum optische Veränderungen vorweist, kratzfest und leicht zu transportieren ist.

Die erfindungsgemäße Tonspur, die in die Oberfläche der Münze oder Medaille geprägt ist, ist auch nach Jahren noch auslesbar und weist keine Temperatur-bedingten Veränderungen auf, vorausgesetzt, es handelt sich um normale Außentemperaturen und es findet keine beabsichtigte Erwärmung bis zum Schmelzpunkt des verwendeten Metalls statt. Ein weiterer Vorteil für die erfindungsgemäße Münze oder Medaille mit geprägter Tonspur ist, dass die Münze oder Medaille aus massivem Metall besteht, insbesondere aus einem Edelmetall. Ein solches Metall ist widerstandsfähig und auch ästhetisch ansprechend. Bevorzugt sind vor allem die Metalle Gold (Au), Silber (Ag), Platin (Pt), Palladium (Pd), Kupfer (Cu) und Nickel (Ni) sowie vergoldete oder versilberte Metallrohlinge. Auch plattierte Rohlinge können gemäß dem erfindungsgemäßen Verfahren verwendet werden.

Ein weiterer Vorteil der erfindungsgemäßen Münze oder Medaille mit geprägter Tonspur ist, dass trotz der Kleinheit der Münze oder Medaille der Informationsgehalt mindestens vergleichbar mit einer Single-Schallplatte auf Ihrer Oberfläche untergebracht werden kann. Dies ist dadurch begründet, dass durch die Verwendung von Metallen eine hohe Stabilität der Tonspur erreicht wird und diese somit dichter geprägt, also der Abstand der einzelnen Tonrillen kleiner gewählt werden kann als bei einer herkömmlichen Schallplatte. Bedingt durch die Dichte der Tonspur und der damit einhergehenden Informationsdichte sollte weiterhin eine langsame Drehgeschwindigkeit von insbesondere 33 U/min eines herkömmlichen Schallplattenspielers oder eine noch langsamere Geschwindigkeit eines eigens für die Münze oder Medaille konstruierten Abspielgerätes gewählt werden.

Besonders günstig ist die Verwendung einer Tonspur auf der Münze oder Medaille, deren Rille in V-Form in die Oberfläche der Münze oder Medaille eingeprägt ist und dieses "V" insbesondere einen Neigungswinkel zur Horizontalen, also der Oberfläche der Münze oder Medaille, von 45° aufweist, was die Speicherung von Informationen einer Stereo-Auszeichnung ermöglicht.

In vorteilhafter Weiterbildung ist es vorgesehen, dass die Münze oder Medaille vor dem Prägen der Tonspur zuerst so bearbeitet wird, dass sie eine möglichst planare und glatte Oberfläche aufweist. Hierzu wird die Münze oder Medaille als Rohling (Ronde) in einem Pressraum, der aus dem Prägering mit einander gegenüberliegendem, aufgesetztem ersten und zweiten Prägestempel aufgebaut ist, vorgelegt. Der Prägering sowie die beiden Prägestempel bestehen aus sehr druckfestem Material.

Im Präge-Schritt wird bevorzugt mit sehr hohem Druck (etwa 200 to bis 800 to) geprägt.

In einer vorteilhaften Ausgestaltung weisen der erste und zweite Prägestempel eine sehr glatte Oberfläche in Richtung der Prägekammer auf. Auf mindestens einem Prägestempel befinden sich Matrizen, die in die Presskammer zwischen den Rohling und dem ersten und/oder zweiten Prägestempel eingelegt wird/werden. Dies ermöglicht das gleichzeitige Prägen der entsprechenden Tonspur und/oder des Motivs auf der der Tonspur gegenüber liegenden Seite der Münze oder Medaille mit gleichzeitig sehr glatter Oberfläche, dem sogenannten Spiegelglanz. Es wäre auch möglich eine Tonspur mit einem Motiv auf einer Seite der Münze oder Medaille sowie ein weiteres Motiv auf der der Tonspur gegenüber liegenden Seite der Münze oder Medaille zu prägen.

In einer weiteren vorteilhaften Ausgestaltung weisen der erste und zweite Prägestempel wiederum eine sehr glatte Oberfläche in Richtung der Prägekammer auf. Auf einem der beiden Prägestempel befindet sich eine Matrize, die das Negativ des erwünschten Motivs zeigt. Dies ermöglicht das Prägen des Motivs mit sehr glatter Oberfläche, dem sogenannten Spiegelglanz. In einem zweiten Prägeschritt wird im Anschluss mittels einer weiteren Matrize die Tonspur, möglicherweise mit einem weiterem Motiv, auf der dem Motiv gegenüber liegenden Seite der Münze oder Medaille eingeprägt.

In noch einer weiteren vorteilhaften Ausgestaltung weisen der erste und zweite Prägestempel eine sehr glatte Oberfläche in Richtung der Prägekammer auf. Hierbei wird noch keine Matrize verwendet, um eine optimale Verdichtung und das Ausgleichen jeglicher Unebenheiten an der Oberfläche (Spiegelglanz) des Rohlings zu erreichen. Im zweiten Prägeschritt wird mittels mindestens einer Matrize, die in die Presskammer zwischen den Rohling und dem ersten und/oder zweiten Prägestempel eingelegt wird/werden, die entsprechende Tonspur und/oder das Motiv auf der der Tonspur gegenüber liegenden Seite der Münze oder Medaille eingeprägt.

Es ist auch möglich, dass die Matrize nicht den Durchmesser der Ronde aufweist, sondern kleiner als diese ist. Dies ermöglicht das Prägen von Strukturen - wie der Tonspur - oder Motiven, die sich nicht über die komplette Oberfläche der Münze oder Medaille erstrecken.

Besonders günstig ist die Verwendung einer Prägekammer, bei der zwischen Prägestempel und Prägering ein sehr kleiner Spalt, insbesondere ein Spalt von etwa 0,02 mm, liegt. Dies stellt sicher, dass so wenig Material wie möglich verloren geht.

In vorteilhafter Weiterbildung der erfindungsgemäßen Lösung ist die Verwendung einer insbesondere galvanisch hergestellten Matrize vorgesehen.

Hierzu wird zuerst eine Metallplatte mit einer Kunststoffschicht aus insbesondere Nitrozellulose-Lack versehen. In diese Kunststoffschicht wird, wie bei einer Schallplatte, mittels eines Stichels die Tonspur der Matrize eingebracht.

Dann wird diese Schicht galvanisch mit einer insbesondere 4-5 µm dicken Schicht aus Silberelektrolyt versehen.

Auf die Silberelektrolyt-Schicht wird ein sehr dünnes Trennmittel aufgetragen.

Auf diese Schicht wird galvanisch eine insbesondere etwa 250 µm dicke Nickel-Schicht aufgebracht, die im Anschluss abgelöst wird und als Matrize dient.

Besonders günstig ist es, wenn die Münze oder Medaille vor oder nach den beiden Präge-Vorgängen im Zentrum mit einem Mittelloch versehen wird, um das Abspielen mit einem handelsüblichen Plattenspieler zu ermöglichen.

Ein weiterer Vorteil der erfindungsgemäßen Lösung ist, dass die so geprägte Münze auf einem handelsüblichen Plattenspieler mit deaktivierter Abschaltautomatik verwendet werden kann.

Weitere Vorteile, Einzelheiten und Merkmale ergeben sich aus der nachfolgende Beschreibung mehrerer Ausführungsbeispiele der Erfindung anhand der Zeichnung.

Es zeigen:
- Fig. 1: eine schematische Darstellung der Aufsicht auf eine erfindungsgemäße Münze oder Medaille mit integrierter Tonspur in einer ersten Ausführungsform;
- Fig. 2: eine perspektivische Darstellung einer erfindungsgemäßen Münze oder Medaille mit integrierter Tonspur in der Ausführungsform gemäß Fig. 1;
- Fig. 3: eine perspektivische Darstellung einer weiteren Ausführungsform einer erfindungsgemäßen Münze oder Medaille mit Darstellung eines beispielhaften Motives, welches auf der der Tonspur gegenüberliegenden Seite der Münze oder Medaille eingeprägt ist;
- Fig. 4: eine schematische Darstellung eines Teiles der auf der Münze oder Medaille eingeprägten Tonspur in Detailansicht;
- Fig. 5: eine perspektivische Darstellung einer erfindungsgemäßen Münze oder Medaille mit integrierter Tonspur, wie sie beispielhaft in einem skizzierten handelsüblichen Schallplattenspieler eingelegt ist;
- Fig. 6: eine schematische Darstellung der Seitenansicht der auf der erfindungsgemäßen Münze oder Medaille eingeprägten Tonspur und eine schematische Darstellung der Spitze einer Abtastnadel eines Tonabnehmers, die dazu verwendet wird, die Tonspur auszulesen;
- Fig. 7: eine schematische Darstellung des Querschnittes der Prägekammer mit Prägering, erstem und zweitem Prägestempel sowie dem Rohling der erfindungsgemäßen Münze oder Medaille; und
- Fig. 8: eine schematische Darstellung des Querschnittes der Prägekammer mit Prägering, erstem und zweitem Prägestempel, Rohling der erfindungsgemäßen Münze oder Medaille sowie der zum Einbringen der Tonspur und/oder des Reliefs auf der gegenüberligen den Seite verwendeten Matrize.

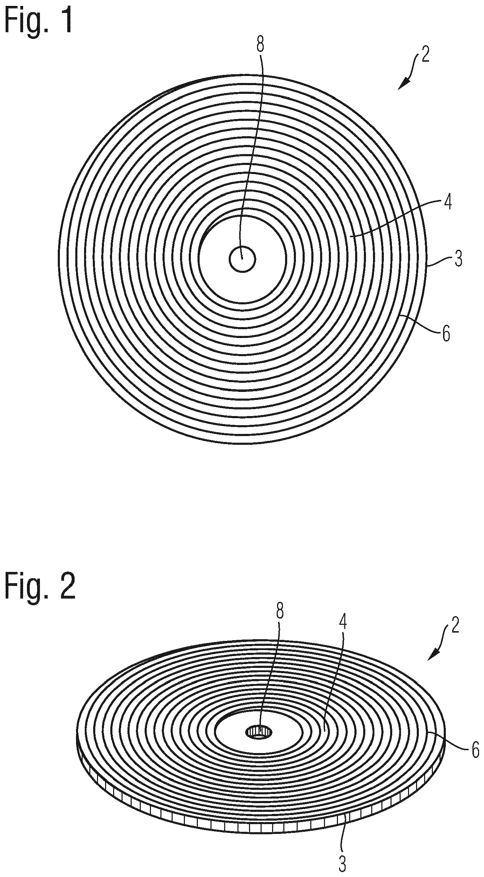

Aus **Fig. 1** ist eine erfindungsgemäße Münze oder Medaille **2** mit einem umlaufenden Außenrand **3** in Aufsicht ersichtlich. Eine erfindungsgemäße Münze oder Medaille weist einen Durchmesser von etwa 50 mm bis 150 mm, insbesondere ca. 100 mm, auf. Auf der Oberfläche **4** der Münze oder Medaille **2** ist eine spiralförmige Tonspur **6** eingeprägt. Wie bei einer handelsüblichen Schallplatte besteht die Tonspur **6** aus einer durchgängigen Rille ohne Unterbrechungen, die sich beginnend im kleinen Abstand vom äußeren Rand der Münze oder Medaille **2** bis zur Freifläche in deren Mitte erstreckt. Diese Freifläche in der Mitte der Münze oder Medaille **2,** in welcher keine Tonspur **6** geprägt ist, ist nötig, da sich dieser Bereich konstruktionsbedingt durch einen handelsüblichen Schallplattenspieler **12** nicht auslesen lässt und weist in etwa einen Durchmesser von 20 mm bis 50 mm im Falle einer Münze, 50 bis 100 mm im Falle einer Medaille auf. Konstruiert man jedoch ein eigenes Auslesegerät für die Münze oder Medaille **2,** so wäre es möglich dieses so zu konstruieren, dass diese Freifläche vermieden werden kann und die Tonspur **6** sich bis hin zum Zentrum der Münze oder Medaille **2** erstrecken kann. Um das Abspielen mit einem handelsüblichen Plattenspieler zu ermöglichen, ist im Zentrum der Münze oder Medaille ein Mittelloch **8** vorgesehen. Wählt man wiederum ein eigenes Auslesegerät für die Münze oder Medaille **2,** so wäre es möglich dieses Mittelloch **8** durch eine Vertiefung zu ersetzen, oder sogar durch eine Fixierung mittels des Plattentellers **20** vollständig zu vermeiden.

**Fig. 2** zeigt eine perspektivische Seitenansicht einer erfindungsgemäßen Münze oder Medaille **2** mit einem umlaufenden Außenrand **3.** Es ist wiederum die Tonspur **6** sowie das Mittelloch **8** dargestellt.

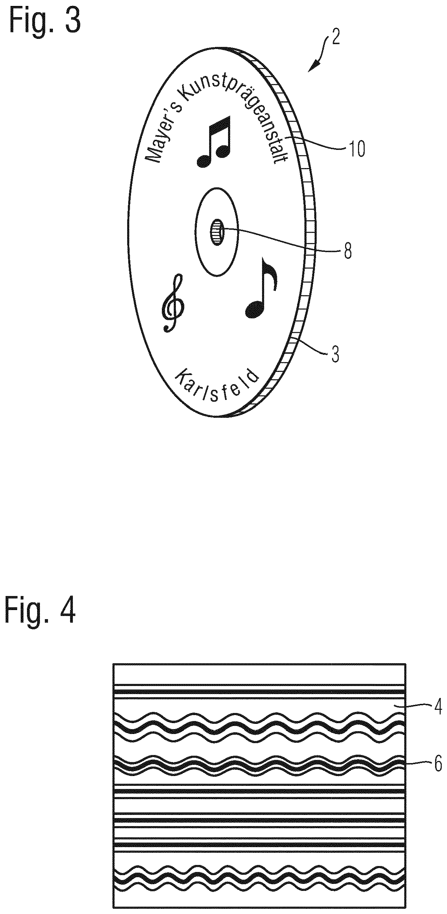

**Fig. 3** zeigt eine andere perspektivische Seitenansicht einer erfindungsgemäßen Münze oder Medaille **2** mit einem umlaufenden Außenrand **3.** Bei dieser Darstellung ist wiederum das Mittelloch **8** dargestellt, jedoch nun von der Rückseite (der der Tonspur gegenüberliegenden Seite der Münze oder Medaille **2).** Des weiteren ist ein beispielhaftes Motiv oder Relief **10** erkennbar, das auf dieser Seite der Münze eingeprägt sein kann.

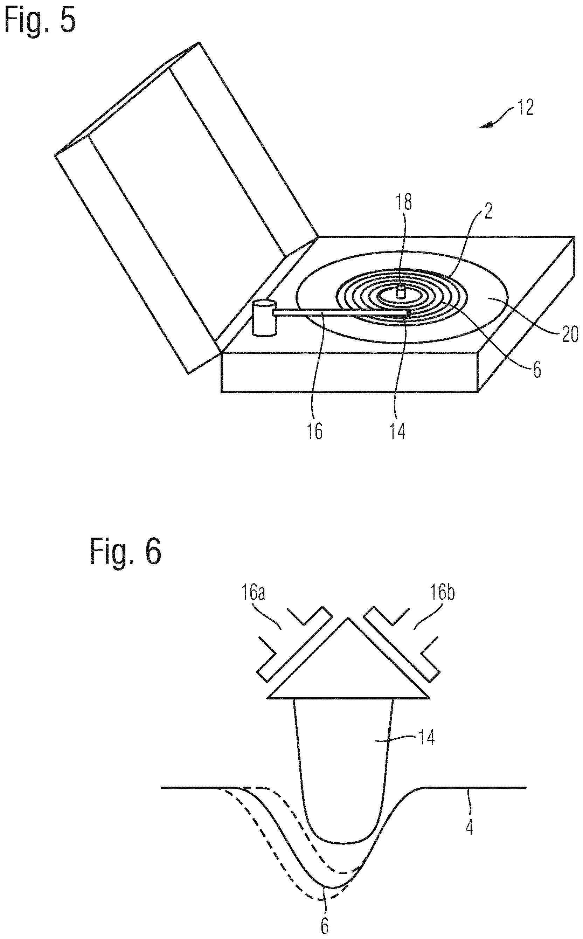

**Fig. 4** zeigt eine schematische Darstellung eines Ausschnittes der auf der Münze oder Medaille eingeprägten Tonspur **6** in Detailansicht. Die Oberfläche **4** der Münze besteht erfindungsgemäß aus einem widerstandsfähigen als auch ästhetischem Material. Hierzu werden unter anderem vor allem die Bund- und Edelmetalle Gold (Au), Silber (Ag), Platin (Pt), Palladium (Pd), Kupfer (Cu) und Nickel (Ni), sowie vergoldete oder versilberte Metallrohlinge, aber auch Stahl, vorgeschlagen. Des weiteren erkennt man in **Fig. 4****,** dass die Tonspur **6** gerade oder wellenförmig verlaufen kann. Der Verlauf der "seitlichen" Auslenkung der Tonspur **6** entspricht entspricht der Schallschwingung des gespeicherten Signals und kann mittels der Spitze einer Abtastnadel **14** eines Tonabnehmers **16** dargestellt in **Fig. 5** und **Fig. 6** in ein akustisches Signal umgewandelt werden.

**Fig. 5** zeigt eine schematische, perspektivische Darstellung der erfindungsgemäßen Münze oder Medaille **2** mit integrierter Tonspur **6,** wie sie beispielhaft auf den Plattenteller **20** eines skizzierten handelsüblichen Schallplattenspielers **12** eingelegt ist. Der Mittelstift **18** des Schallplattenspielers **12** zentriert die Medaille oder Münze **2** somit auf dem Plattenteller **20,** indem er das Mittelloch **8** durchdringt. Die Tonspur **6** kann mit Hilfe der Spitze einer Abtastnadel **14** des Tonabnehmers **16** in ein akustisches Signal umgewandelt werden.

Aus **Fig. 6** ist eine schematische Darstellung der Seitenansicht der auf der Münze oder Medaille **2** eingeprägten Tonspur **6** und eine schematische Darstellung der Abtastspitze **14** mit der dazugehörigen linken **16a** und rechten**16b** Spule des Tonabnehmers **16.** Die Tiefe der Tonspur **6** kann dazu verwendet werden neben der Seitwärtsbewegung auch eine zusätzliche Tiefenbewegung zu ermöglichen. Damit ist es möglich, das in der Tonspur **6** eingeprägte Stück in Stereo wiederzugeben, wobei ein Kanal durch die Vertikalbewegung, der zweite durch die Horizontalbewegung gekennzeichnet wird. Die Rille der Tonspur **6** weist eine "V"-Form, insbesondere mit einem Neigungswinkel der Flanken von 45° gegenüber der Oberfläche **4,** der Münze oder Medaille **2** auf.

Die gestrichelten Linien in **Fig. 6** zeigen beispielhaft zwei Möglichkeiten, wie die Tiefe der Tonspur variiert werden kann. Dies ist beispielhaft auf der linken Seite gezeigt, jedoch kann anstelle dessen auch die rechte Seite beschrieben werden. Dies macht keinen Unterschied, da ein handelsüblicher Plattenspieler **12** je eine linke **16a** und **rechte16b** Spule des Tonabnehmers **16** besitzt.

Variiert man die Tiefe der Tonspur **6** auf beiden Seiten der Rille gleichzeitig, verändert sich somit die Breite der Tonspur **6,** oder - sollte die Breite konstant gehalten werden - ändert sich zwangsläufig der Neigungswinkel der Flanken. Eine Veränderung der Breite der Tonspur **6** ist im Falle einer Münze oder Medaille **2** denkbar, jedoch nicht erstrebenswert, da es einen höheren Abstand der Rillen erfordert und somit die Informationsdichte heeinflusst. Eine Veränderung des Neigungswinkels der Flanken, symmetrisch oder auch asymmetrisch zum Mittelpunkt der Tonspur **6,** ist günstig unter der Verwendung eines eigenen Auslesegerätes für die Münze oder Medaille **2** mit einer dementsprechend angepassten Spitze der Abtastnadel **14** des Tonabnehmers **16.** Um die Münze oder Medaille **2** jedoch mittels eines handelsüblichen Schallplattenspielers **12** auszulesen, müsste auf eine Veränderung des Neigungswinkels der Flanken gegenüber der Oberfläche **4** verzichtet werden, da eine solche Veränderung ein Auslesen durch die Spitze einer handelsüblichen Abtastnadel **14** verschlechtert.

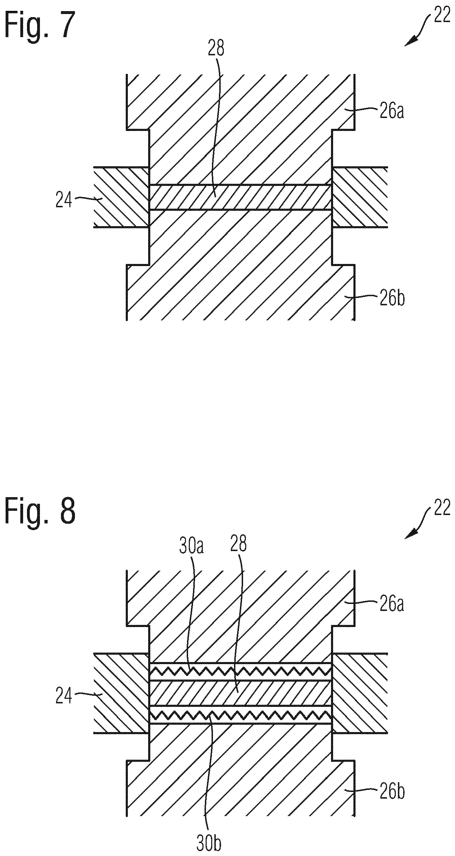

In **Fig. 7** ist ein Querschnitt durch die Prägekammer **22** mit Prägering **24,** erstem **26a** und zweitem **26b** Prägestempel **26** sowie dem Rohling **28** der Münze oder Medaille **2** dargestellt. Besonders günstig es, wenn in der Prägekammer **22** zwischen Prägestempel **26** und Prägering **24** ein sehr kleiner Spalt, insbesondere ein Spalt von 0,02 mm, verwirklicht ist. Dies stellt sicher, dass so wenig Material des Rohlings **28** wie möglich verloren geht. Optimalerweise liegt der Prägering **24** sehr nahe am Rohling **28** der Münze oder Medaille **2** an, um eine Verformung des Rohlings **28** der Münze oder Medaille **2** während des Präge-Vorgangs zu vermeiden. Mittels dieses Aufbaus und der sehr glatten Oberfläche des ersten **26a** und zweiten **26b** Prägestempels **26** ist es möglich, eine optimale Verdichtung und das Ausgleichen jeglicher Unebenheiten an der Oberfläche des Rohlings **28** zu erreichen.

**Fig. 8** zeigt den gleichen Querschnitt durch die Prägekammer **22** wie schon **Fig. 7****,** jedoch ist hierbei zusätzlich die erste **30a** und zweite **30b** Matrize **30,** zum einen für das Prägen der Tonspur **6,** zum anderen für das Prägen des Motivs oder Reliefs **10** auf der der Tonspur **6** gegenüberliegenden Seite der Münze oder Medaille **2,** dargestellt.

## Patentansprüche

1. Münze oder Medaille, mit mindestens einem umlaufenden Außenrand, wobei die Münze oder Medaille (**2**) aus Stahl, Edelmetall, einer Edelmetalllegierung oder einem Buntmetall besteht oder versilbert oder vergoldet oder mit Edelmetall platiert ist, **dadurch gekennzeichnet, dass** die Münze oder Medaille (2) eine geprägte Tonspur (6) aufweist.

2. Münze oder Medaille nach Anspruch 1, **dadurch gekennzeichnet, dass** die Münze oder Medaille (**2**) auf mindestens einer Seite, insbesondere derjenigen, die einem geprägten Relief (**10**) gegenüberliegt, die Tonspur (**6**) aufweist.

3. Münze oder Medaille nach Anspruch 2, **dadurch gekennzeichnet, dass** die Münze oder Medaille (**2**) auf der Seite der Tonspur (**6**) kein weiteres Motiv oder Relief **(10)** aufweist.

4. ) Münze oder Medaille nach Anspruch 2, **dadurch gekennzeichnet, dass** die Münze oder Medaille (**2**) auf der Seite der Tonspur (**6**) mindestens ein weiteres Motiv oder Relief (**10**) aufweist.

5. Münze oder Medaille nach einem der vorhergehenden Ansprüche, **dadurch gekennzeichnet, dass** es eine spiralig umlaufende Tonspur (**6**) mit einem Innendurchmesser von mindestens 20 mm, aber insbesondere 30 bis 50 mm, aufweist.

6. Münze oder Medaille nach einem der vorhergehenden Ansprüche, **dadurch gekennzeichnet, dass** die Münze oder Medaille (**2**) mindestens ein geprägtes Relief aufweist, das sich auf mindestens einer Seite der Münze oder Medaille (**2**) erstreckt.

7. Münze oder Medaille nach einem der vorhergehenden Ansprüche, **dadurch gekennzeichnet, dass** die Münze oder Medaille (**2**) mindestens eine gedruckte Abbildung aufweist, die sich auf mindestens einer Seite der Münze oder Medaille (**2**) erstreckt.

8. Münze oder Medaille nach einem der vorhergehenden Ansprüche, **dadurch gekennzeichnet, dass** eine Oberfläche (**4**) aufweist in welche die Reliefs geprägt und welche hochglatt ist, insbesondere eine Rauheit von < 5 µm aufweist.

9. Münze oder Medaille nach einem der vorhergehenden Ansprüche, **dadurch gekennzeichnet, dass** im Zentrum der Münze oder Medaille **(2)** eine Zentralausnehmung **(8),** insbesondere eine Vertiefung oder ein Loch, eingebracht ist.

10. Münze oder Medaille nach einem der vorhergehenden Ansprüche, **dadurch gekennzeichnet, dass** die Tonspur **(6)** durch Prägen mittels einer in Analogtechnik erzeugten Matrize **(30)** erzeugt ist.

11. Münze oder Medaille nach einem der vorhergehenden Ansprüche, **dadurch gekennzeichnet, dass** die Tonspur **(6)** durch vertikale und laterale Auslenkung gekennzeichnet ist.

12. Münze oder Medaille nach einem der vorhergehenden Ansprüche, **dadurch gekennzeichnet, dass** die geprägte Tonspur **(6)** eine V-Form, insbesondere mit einem Winkel von 45° gegenüber der Horizontalen, aufweist.

13. Münze oder Medaille nach einem der vorhergehenden Ansprüche, **dadurch gekennzeichnet, dass** die Breite der geprägten Tonspur **(6)** einer bekannten Normalrille der Schallplattentechnik entspricht, insbesondere etwa 65 µm.

14. Münze oder Medaille nach einem der vorhergehenden Ansprüche, **dadurch gekennzeichnet, dass** der Abstand zwischen den einzelnen Rillen der Tonspur geringer ist als bei einer handelsüblichen Schallplatte.

15. Galvanische Herstellung einer Matrize für den Präge-Vorgang einer Münze oder Medaille, **dadurch gekennzeichnet, dass** eine Metallplatte mit einer Kunststoffschicht aus insbesondere Nitrozellulose-Lack versehen wird, in welche insbesondere mittels eines Stichels die Tonspur der Matrize **(30)** eingebracht wird, diese im Anschluss galvanisch mit einer insbesondere 4-5 µm dicken Schicht insbesondere aus Silberelektrolyt versehen wird, auf welche wiederum ein Trennmittel aufgetragen wird, welches im Anschluss galvanisch mit einer insbesondere etwa 250 µm dicken Nickel-Schicht versehen wird, welche nach dem Ablösen als Präge-Matrize **(30)** verwendet wird.

16. Ein- oder Mehrstufiges, insbesondere zweistufiges, Prägeverfahren zur Herstellung einer Münze oder Medaille, **dadurch gekennzeichnet, dass** ein Münz-Rohling (Ronde) **(28)** in einer Prägekammer **(22),** bestehend aus einem Prägering **(24)** sowie einander gegenüberliegenden, aufeinander zu bewegend gelagerten erstem und zweitem Prägestempel **(26),** eingebracht wird, so dass der Rohling in der ersten Stufe des Präge-Vorgangs mit einem Druck von mehr als 200 to, insbesondere von 800 to, geprägt wird und in der zweiten Stufe des Prägevorgangs mittels mindestens einer Matrize **(30),** die in die Prägekammer **(22)** zwischen den Rohling **(28)** und dem ersten und/oder zweiten Prägestempel **(26)** eingelegt wird, die entsprechende Tonspur **(6)** und/oder das Motiv oder Relief **(10)** auf der der Tonspur **(6)** gegenüber liegenden Seite der Münze oder Medaille **(2)** geprägt wird.

## Claims

1. A coin or medal having at least one circumferential outer edge, wherein the coin or medal (2) consists of steel, precious metal, a precious metal alloy or non-ferrous metal or is silvered or gilded or plated with precious metal, **characterized in that** the coin or medal (2) comprises an embossed soundtrack (6).

2. The coin or medal as claimed in claim 1, **characterized in that** the coin or medal (2) comprises the soundtrack (6) on at least one side, in particular on the side which is opposite an embossed relief (10).

3. The coin or medal as claimed in claim 2, **characterized in that** the coin or medal (2) comprises no further motif or relief (10) on the side with the soundtrack (6).

4. The coin or medal as claimed in claim 2, **characterized in that** the coin or medal (2) comprises at least one further motif or relief (10) on the side with the soundtrack (6).

5. The coin or medal as claimed in any one of the preceding claims, **characterized in** having a soundtrack (6) extending in a spiral shape with an internal diameter of at least 20 mm but in particular 30 to 50 mm.

6. The coin or medal as claimed in any one of the preceding claims, **characterized in that** the coin or medal (2) comprises at least one embossed relief which extends on at least one side of the coin or medal (2).

7. The coin or medal as claimed in any one of the preceding claims, **characterized in that** the coin or medal (2) comprises at least one printed image which extends on at least one side of the coin or medal (2).

8. The coin or medal as claimed in any one of the preceding claims, **characterized in that** a surface (4) into which the reliefs are embossed and which has a high level of smoothness, comprises in particular a roughness of < 5 µm.

9. The coin or medal as claimed in any one of the preceding claims, **characterized in that** a central recess (8), in particular a depression or a hole, is introduced in the center of the coin or medal (2).

10. The coin or medal as claimed in any one of the preceding claims, **characterized in that** the soundtrack (6) is produced by embossing using a die (30) produced by analogue technology.

11. The coin or medal as claimed in any one of the preceding claims, **characterized in that** the soundtrack (6) is **characterized by** vertical and lateral deflection.

12. The coin or medal as claimed in any one of the preceding claims, **characterized in that** the embossed soundtrack (6) is of a V-shape, in particular with an angle of 45° with respect to the horizontal.

13. The coin or medal as claimed in any one of the preceding claims, **characterized in that** the width of the embossed soundtrack (6) corresponds to a known coarse groove of record technology, in particular about 65 µm.

14. The coin or medal as claimed in any one of the preceding claims, **characterized in that** the distance between the individual grooves of the soundtrack is less than in case of a commercially available record.

15. A galvanic production of a die for the embossing process of a coin or medal, **characterized in that** a metal plate is provided with a plastic layer of, in particular, nitrocellulose lacquer, into which, in particular by means of a graver, the soundtrack of the die (30) is introduced, which is then galvanically provided with a layer, in particular 4-5 um thick, in particular of silver electrolyte, onto which in turn a separating agent is applied which is then galvanically provided with a nickel layer, in particular about 250 um thick, which, after being detached, is used as the embossing die (30).

16. A single-stage or multi-stage, in particular two-stage, embossing method for producing a coin or medal, **characterized in that** a coin blank (round blank) (28) is introduced into an embossing chamber (22) consisting of an embossing ring (24) and mutually opposing first and second embossing stamps (26) which are mounted to move towards each other so that in the first stage of the embossing process the blank is embossed at a pressure of more than 200 to, in particular of 800 to, and in the second stage of the embossing process, by means of at least one die (30) which is placed into the embossing chamber (22) between the blank (28) and the first and/or second embossing stamps (26), the corresponding soundtrack (6) and/or the motif or relief (10) is embossed on the side of the coin or medal (2) opposite the soundtrack (6).

## Revendications

1. Pièce de monnaie ou médaille, avec au moins un bord extérieur périphérique, où la pièce de monnaie ou médaille (2) est constituée d'acier, de métal précieux, d'un alliage de métal précieux ou d'un métal non ferreux ou est argentée ou dorée ou plaquée de métal précieux, **caractérisée en ce que** la pièce de monnaie ou médaille (2) présente une piste sonore estampée (6).

2. Pièce de monnaie ou médaille selon la revendication 1, **caractérisée en ce que** la pièce de monnaie ou médaille (2) présente la piste sonore (6) sur au moins une face, notamment celle qui fait face à un relief estampé (10).

3. Pièce de monnaie ou médaille selon la revendication 2, **caractérisée en ce que** la pièce de monnaie ou médaille (2) ne comporte pas d'autre motif ou relief (10) du côté de la piste sonore (6) .

4. Pièce de monnaie ou médaille selon la revendication 2, **caractérisée en ce que** la pièce de monnaie ou médaille (2) présente au moins un autre motif ou relief (10) du côté de la piste sonore (6) .

5. Pièce de monnaie ou médaille selon l'une des revendications précédentes, **caractérisée en ce qu'**elle présente une piste sonore (6) tournant en spirale et ayant un diamètre intérieur d'au moins 20 mm, mais en particulier de 30 à 50 mm.

6. Pièce de monnaie ou médaille selon l'une des revendications précédentes, **caractérisée en ce que** la pièce de monnaie ou médaille (2) présente au moins un relief estampé, qui s'étend sur au moins une face de la pièce de monnaie ou de la médaille (2).

7. Pièce de monnaie ou médaille selon l'une quelconque des revendications précédentes, **caractérisée en ce que** la pièce de monnaie ou médaille (2) comporte au moins une image imprimée s'étendant sur au moins une face de la pièce de monnaie ou médaille (2) .

8. Pièce de monnaie ou médaille selon l'une des revendications précédentes, **caractérisée en ce qu'**elle présente une surface (4) dans laquelle les reliefs sont estampés et qui est très lisse, en particulier qui présente une rugosité de < 5 µm.

9. Pièce de monnaie ou médaille selon l'une des revendications précédentes, **caractérisée en ce qu'**un évidement central (8), en particulier un creux ou un trou, est ménagé au centre de la pièce de monnaie ou de la médaille (2).

10. Pièce de monnaie ou médaille selon l'une des revendications précédentes, **caractérisée en ce que** la piste sonore (6) est produite par estampage au moyen d'une matrice (30) obtenue par une technique analogique.

11. Pièce de monnaie ou médaille selon l'une quelconque des revendications précédentes, **caractérisée en ce que** la piste sonore (6) est **caractérisée par** des déviations verticales et latérales.

12. pièce de monnaie ou médaille selon l'une des revendications précédentes, **caractérisée en ce que** la piste sonore (6) frappée présente une forme en V, notamment avec un angle de 45° par rapport à l'horizontale.

13. Pièce de monnaie ou médaille selon l'une des revendications précédentes, **caractérisée en ce que** la largeur de la piste sonore estampée (6) correspond à un sillon normal connu de la technique du disque, en particulier à environ 65 um.

14. Pièce de monnaie ou médaille selon l'une des revendications précédentes, **caractérisée en ce que** la distance entre les différents sillons de la piste sonore est inférieure à celle d'un disque vinyle usuel.

15. Fabrication par électrolyse d'une matrice pour l'opération de frappe d'une pièce de monnaie ou d'une médaille, **caractérisée en ce qu'**une plaque métallique est pourvue d'une couche de matière plastique, en particulier de laque nitrocellulosique. La matrice (30) est introduite dans cette plaque, en particulier au moyen d'un burin, puis elle est recouverte par galvanisation d'une couche, en particulier d'électrolyte d'argent, d'une épaisseur de 4 à 5 um, sur laquelle on applique à nouveau un agent de séparation qui est ensuite recouvert par galvanisation d'une couche de nickel, en particulier d'une épaisseur d'environ 250 um, qui est utilisée comme matrice de frappe (30) après avoir été détachée.

16. Procédé de frappe en une ou plusieurs étapes, en particulier en deux étapes, pour la fabrication d'une pièce de monnaie ou d'une médaille, **caractérisé en ce qu'**une ébauche de pièce de monnaie (flan) (28) est introduite dans une chambre de frappe (22), constituée d'un anneau de frappe (24) ainsi que d'un premier et d'un deuxième poinçon de frappe (26) opposés l'un à l'autre et montés de manière à se déplacer l'un vers l'autre, de sorte que l'ébauche est soumise, dans la première étape de l'opération de frappe, à une pression de plus de 200 t, en particulier de 800 t, et que, dans la deuxième étape de l'opération de frappe, la piste sonore (6) correspondante et/ou le motif ou le relief (10) sont frappés sur la face de la pièce de monnaie ou de la médaille (2) opposée à la piste sonore (6), au moyen d'au moins une matrice (30) qui est placée dans la chambre de frappe (22) entre le flan (28) et le premier et/ou le deuxième poinçon de frappe (26).
